# EUROPÄISCHE PATENTSCHRIFT

(11) **EP 1 082 552 B1**
(45) Veröffentlichungstag und Bekanntmachung des Hinweises auf die Patenterteilung: **03.03.2004**
(21) Anmeldenummer: 00910479.5
(22) Anmeldetag: 24.03.2000
(51) Int. Cl.: F16G 11/04

(54) **VORRICHTUNG ZUM BEFESTIGEN, SPANNEN ODER ZIEHEN EINES DEHNBAREN ZUGELEMENTES, INSBESONDERE EINES SEILES**
DEVICE FOR FIXING, TENSIONING OR PULLING AN EXTENSIBLE TRACTION ELEMENT, IN PARTICULAR, A CABLE
DISPOSITIF POUR LA FIXATION, LE SERRAGE OU L'ETIRAGE D'UN ELEMENT DE TRACTION EXTENSIBLE, EN PARTICULIER D'UN CABLE

(30) Priorität: 01.04.1999 CH 62499
(43) Veröffentlichungstag der Anmeldung: 14.03.2001
(73) Patentinhaber: Rikli, Christian, 3626 Hünibach (CH); Feuz, Fritz, Thun (CH)
(72) Erfinder: Rikli, Christian, 3626 Hünibach (CH); Feuz, Fritz, Thun (CH)
(74) Vertreter: Frauenknecht, Alois J.
(86) Internationale Anmeldenummer: PCT/CH2000/000177
(87) Internationale Veröffentlichungsnummer: WO 2000/060253

(56) Entgegenhaltungen:
- FR-A- 2 685 406
- US-A- 4 643 609

## Beschreibung

Als End- oder Zwischenbefestigung von Stahlseilen werden neben Vergussköpfen, Klemmköpfen und Pollern auch sogenannte Seilklemmen eingesetzt. Die erforderliche Abziehkraft wird durch Klemmbacken erzeugt, die z.B. mit Schrauben, Federn oder Keilen an das Seil angepresst werden. Diese Lösung eignet sich für verhältnismässig kleine Kräfte, bei denen die Seildehnung über die Klemmenlänge während des Aufbaus der Zugkraft vemachlässigbar ist. Zum Spannen dickerer Seile mit höheren Kräften sind die heute bekannten Klemmen jedoch weniger geeignet, weil sie das Seil beschädigen können und gewisse Unsicherheiten bei der Übertragung des Reibschlusses in sich bergen.

Der vorliegenden Erfindung liegt die Aufgabe zugrunde, eine Vorrichtung anzugeben, mit weicher dehnbare Zugelemente schonend gespannt, befestigt und gezogen werden können. Diese Aufgabe wird durch die Merkmalkombination des Anspruchs 1 gelöst. Nachfolgend werden Ausführungsbeispiele der Erfindung anhand der Zeichnung erläutert. Darin zeigt:
Fig.1 eine Seitenansicht und Fig.2 einen Querschnitt, einer ersten Ausführungsform,
Fig.3 einen Querschnitt einer zweiten Ausführungsform, und
Fig 4 ein Detail der Hubbegrenzung der Klemmbacken.

Die Vorrichtung dient zum Befestigen, Spannen oder Ziehen eines längselastischen oder dehnbaren Zugelementes. Ein bevorzugtes Anwendungsgebiet ist das Spannen von Stahiseilen für Tragsstrukturen, z.B. von hängenden, grossflächigen Dächern, Dabei spielt die gespannte Länge des Seiles eine grosse Rolle für dessen Funktion und Formstabilität. Neue Stahlseile haben leider die Tendenz; innerhalb der ersten paar Wochen der Belastung in der Länge zu wachsen. Dieses Längenwachstum hat die unangenehme Folge, dass die neu gebaute Hängestruktur nach Inbetriebsetzung wieder für einige Wochen geschlossen werden muss, um die Seile nachzuspannen.

Dieser Betriebsunterbruch kurz nach Eröffnung der Anlage und danach auch bei der Installierung von periodisch zu erneuernden Seilen ist natürlich den Betreibern solcher Anlagen unangenehm. Unter Umständen ist ein Nachspannen nach der Installation auch nicht mehr möglich. Ähnliche Probleme ergeben sich bei Tragseilen von Hängebrücken und Seilbahnen, wo ebenfalls Seile nachgespannt, verschoben und periodisch ersetzt werden müssen. Auch andere dehnbare Zugelemente wie Zugstäbe, Bänder oder Kunststoffseile sind bei grossen Lasten schwierig zu spannen, ohne sie zu beschädigen.

Beim Aufbringen der Zugkraft bei Klemmbacken rutscht das Zugelement ausgehend von der Zugseite des Zugelements her bei überschreiten der Haftreibung durch, bis es schliesslich über die ganze Länge der Klemmbacke trägt. Es ist aber in der praktischen Anwendung nicht bestimmbar, wieviel Kraft pro Längeneinheit übertragen wird. Ist das Material der Klemmbacken hart, wird zumindest die Oberfläche des Zugelements beschädigt. Ist das Material weich, wird es zumindest auf der dem gezogenen Seil zugewandten Seite abgerieben.

Das nachfolgend beschriebene Ausführungsbeispiel vermeidet diese Mängel.

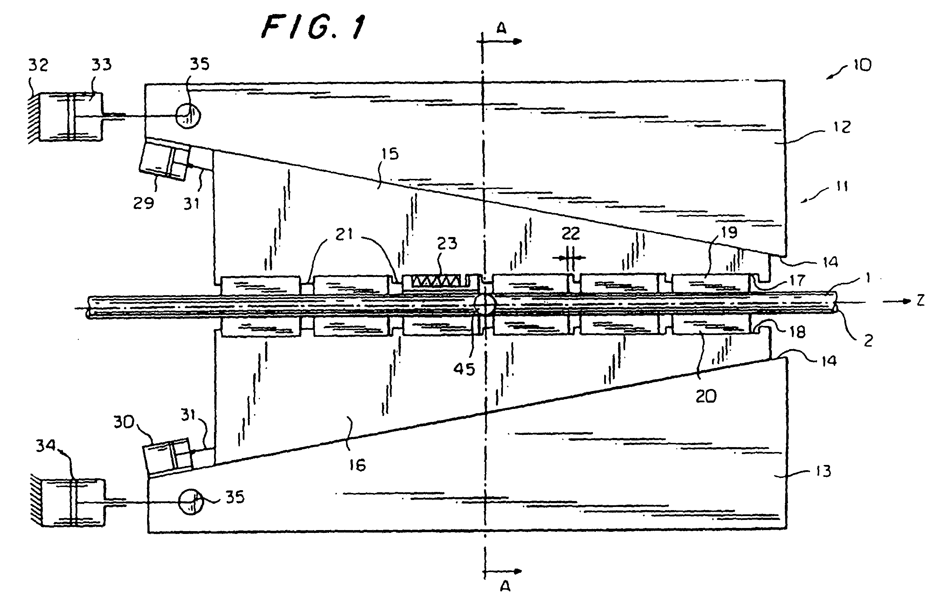

Auf ein Stahlseil 1 mit einer Achse 2 wirkt ein Zug in Achsrichtung Z. Das Seil ist in der Vorrichtung 10 geklemmt. Die Vorrichtung 10 hat ein Gestell 11 mit zwei symmetrisch zur Achse 2 angeordneten Gestellteilen 12, 13. Die Teile 12, 13 haben gegeneinander in Zugrichtung Z konvergierende Keilflächen 14. Auf den Flächen 14 gleiten zwei einander gegenüberliegende Keile 15, 16. Diese haben einander zugewandte, geradlinige Gleitflächen 17, 18 z.B. in Form von Schwalbenschwanzführungen, auf denen je eine Reihe von Klemmschuhen 19, 20 verschiebbar geführt sind. Die Schuhe 19, 20 sind aus der in Fig.1 dargestellten Grundstellung, abgesehen vom in Zugrichtung Z hintersten Schuhpaar durch Anschläge 21 begrenzt in Zugrichtung Z verschiebbar. Die mögliche Verschiebung 22 der Schuhe aus ihrer Grundstellung 19, 20 nimmt in Zugrichtung Z linear zu. Sie ist einstellbar, um die Vorrichtung 10 an Seile 1 mit unterschiedlichem Elastizitätsmodul (bei Stahlseilen zwischen etwa 70'000 und 160'000 N/mm²) anzupassen. Die Schuhe 19, 20 haben alle die gleiche Länge. Sie sind auf den Gleitflächen 17, 18 auswechselbar befestigt, um die Vorrichtung 10 anderen Querschnitten des Seils 1 oder anderer Zugelemente anzupassen. Die Schuhe 19 werden durch Federn 23 in ihre Grundstellung zurückgestellt.

Am Gestell 11 sind zwei Hydraulikzylinder 29, 30 befestigt, deren Kolbenstangen 31 an den Keilen 15, 16 befestigt sind und diese betätigen.

Zwei weitere an einem, Fundament 32 verankerte Hydraulikzylinder 33, 34 ziehen das Gestell 11 entgegen der Zugrichtung Z über nicht dargestellte Zugstangen und Querbolzen 35, die durch die Teile 12, 13 durchgesteckt sind.

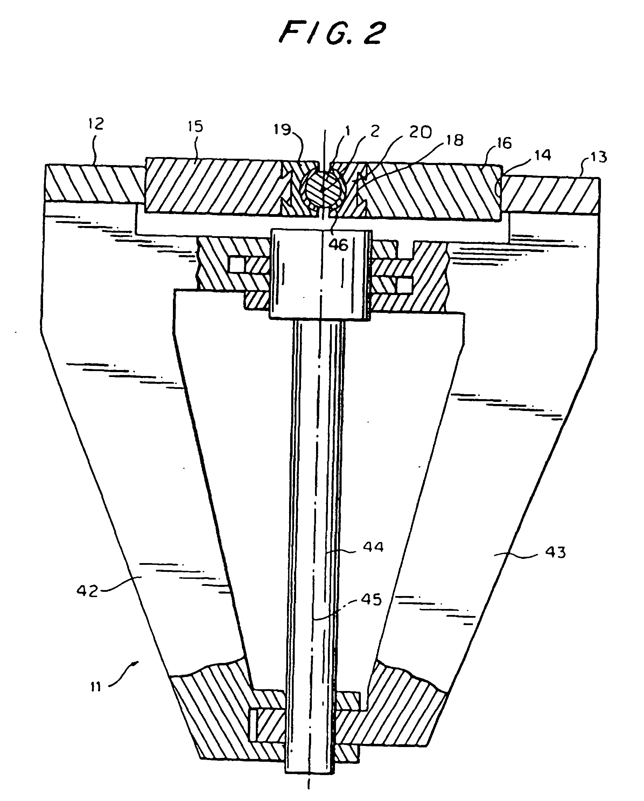

Wie aus Fig. 2 hervorgeht, sind die beiden Gestellteile 12, 13 bloss auf der einen Seite des Seils gelenkig miteinander verbunden. In der vereinfachten Darstellung erfolgt die Verbindung über eine Welle 44 deren Achse 45 die Achse 2 senkrecht annähernd in der Längsmitte der Reihe von Schuhen 19, 20 schneidet. Dadurch wird erreicht, dass bei linear zunehmender Dehnung des Seils 1 in Zugrichtung Z und daher annähernd linear abnehmendem Seildurchmesser trotzdem über die ganze Länge der Reihe Schuhe 19, 20 die gleiche radiale Anpresskraft auf das Seil 1 wirkt. Diese Wirkung kann allerdings auch ohne Schwenkbewegung, sondern mit relativ langen Dehnschrauben annähernd erreicht werden, welche die Teile 12, 13 gegeneinander spannen.

Die Schuhe 19, 20 haben halbzylindrische Ausnehmungen mit Einsätzen 46 aus einem Material, das weicher ist als das zu spannende oder zu befestigende Zugelement. Bei Stahlseilen 1 eignet sich für die Einsätze 46 aus "weichen" Materialien z.B. Lagermetall, Zinn, Kunststoff etc. Bei gleicher Anpresskraft zwischen Schuh 19, 20 und Seil 1 wie zwischen Schuh 19, 20 und Gleitfläche 17, 18 ist die Haftung zwischen Schuh 19, 20 und Seil 1 grösser als die zwischen Schuh 19, 20 und Gleitfläche 17, 18. Je nach Oberflächenbeschaffenheit des Zugelements 1 und Materialwahl der Einsätze 46 bedeutet dabei "Haftung" entweder Haftreibung (glatte Seiloberfläche) oder zumindest teilweise Formeingriff (rauhe Oberfläche mit Eindrücken der Einsätze 46).

Zum Spannen wird das Seil 1 von der Seite her zwischen die Backenpaare 19, 20 eingelegt und die Keile 15, 16 mittels der Zylinder 29, 30 gespannt. Darauf werden die Zylinder 33, 34 betätigt. das in Zugrichtung Z hinterste, feste Backenpaar 19, 20 zieht zusammen mit den anderen bis zum Ende von deren Reibschluss gegenüber den Gleitflächen 17, 18 am Seil 1 und dehnt dieses daher. Wegen der von hinten nach vorn zunehmenden Dehnung rutscht zuerst das vorderste Schuhpaar 19, 20 unmittelbar danach auch die übrigen. Die Abstufung der Hubbegrenzungen 22 ist derart ausgelegt, dass alle Schuhe 19, 20 an ihren Anschlägen 21 anliegen, wenn mit den Zylindern 33, 34 die vorgesehene Zugkraft für das Seil 1 erreicht ist. Dadurch kann die insbesondere bei dicken Seilen sehr grosse aufzubringende Kraft trotz der Seildehnung auf einer grossen Länge auf das Seil übertragen werden, was bisher wegen der Verletzung des Seils durch Schlupf oder Quetschung bei herkömmlichen Spannvorrichtungen nicht möglich war.

Dies eröffnet die Möglichkeit, z.B. Stahlseile für Tragstrukturen vor der Montage vorzustrecken, so dass kurz nach der Montage erfolgende Unterbrüche zum Nachspannen weitgehend vermieden werden können. Wenn die Vorrichtung 10 zur Befestigung eines Zugelementes 1 eingesetzt wird, können die Spannzylinder 33, 34 weggelassen und das Gestell 11 direkt verankert werden. Die Zylinder 29, 30 brauchen nur zu Montagezwecken eingesetzt zu werden. Die Vorrichtung eignet sich auch zum kontinuierlichen Ziehen von dehnbaren Zugelementen 1 indem zwei dieser Vorrichtungen 10 hintereinander geschaltet werden und abwechslungsweise schrittweise Zugbewegungen ausführen.

Die Begrenzungen 21 der Verschiebebewegungen der Klemmbacken 19, 20 in Zugrichtung Z ist nicht unbedingt erforderlich, aber zweckmässig, damit bei über die Klemmlänge variierendem Durchmesser des Seils 1 trotzdem eine ungefähr gleichmässige Verteilung der Zugkraft über die Klemmlänge erfolgt.

Die radiale Anpressung der Halter 15, 16 kann statt über die Klemmflächen 14 auch über radial zur Achse 2 gerichtete Zylinder oder Ober ein Parallelogrammgestänge erfolgen, dessen Totpunktlage nahe der maximal gespannten Länge des Seils1 ist. Solche Parallelogrammgestänge können ebenfalls wie die Keile 15, 16 auf Teilen 12, 13 miteinander verbunden sein, welche um die Achse 45 gegeneinander schwenkbar sind. Die Schwenkbarkeit um die Achse 45 ist allerdings nicht unbedingt erforderlich. Wenn z. B. auf die Teile 12, 13 eine Vorspannkraft mittels Dehnschrauben wirkt, reicht normalerweise die Vordehnung der Schrauben (mehrere mm) ohne weiteres zum Ausgleich der Durchmesserabnahme des Kabels 1 durch Dehnung aus, um eine gleichmässige Kraftverteilung zu erreichen.

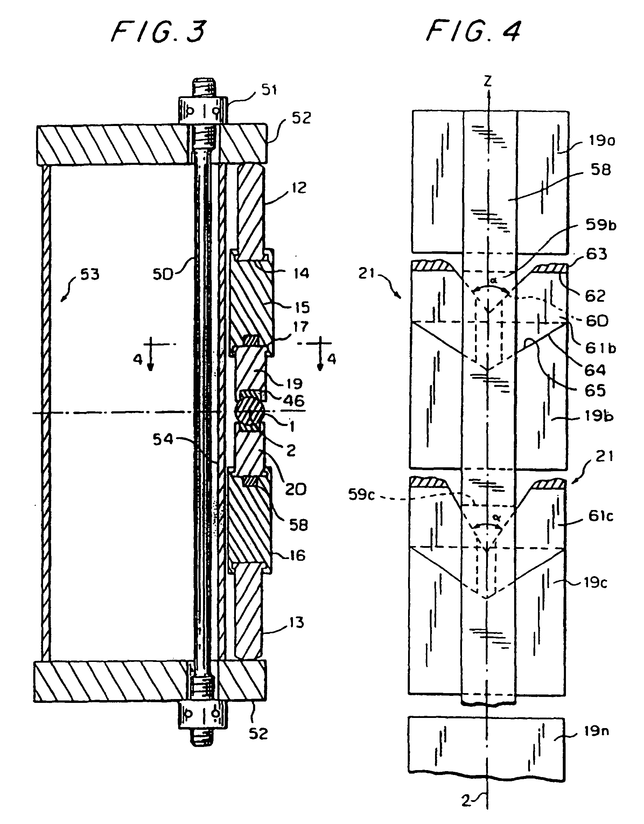

Figur 3 zeigt die Variante, bei welcher die beiden Gestellteile 12 + 13 nicht schwenkbar, sondern starr miteinander durch Dehnschrauben 50 verbunden sind. Die Dehnschrauben 50 liegen an Platten 52 an, weiche durch eine Reihe von Rechteckrohren 53 voneinander distanziert sind. Die Dehnschrauben 50 sind unmittelbar benachbart der der Achse 2 zugewandten Seitenwand 54 der Rohre 53 angeordnet. Durch die exzentrische Belastung der Röhre 53 durch die Dehnschrauben 50 biegen sich die Rohre 53 leicht durch. Wenn das Seil gespannt wird, werden über die Keile 15,16 die Gestellteile 12,13 auseinander gespreizt. Wegen der elastischen Vordehnung der Dehnschrauben 50, welche ein mehrfaches der Durchmesserdifferenz des Seiles 1 zwischen seinem gespannten und ungespannten Zustand beträgt, wird die Radialkraft der Schuhe 19, 20 auf das Seil 1 trotz des mit zunehmender Zugspannung abnehmenden Durchmessers ungefähr gleichmässig über die ganze Klemmlänge verteilt.

In Fig. 4 ist eine Einrichtung zum automatischen Einstellen der Anschläge 21 für den Verschiebeweg der Kiemmschuhe 19, 20 schematisch dargestellt. An dem in Zugrichtung Z. vordersten Klemmschuh 19 ist eine Steuerstange 58 festgeschraubt. Die hintersten Schuhe in 19, 20 (oder die zwei oder drei hintersten Schuhe) sind starr an den Keilen 15, 16 befestigt. Bei jedem Schuh 19 ausser dem hintersten und vordersten steht von der Steuerstange 58 ein dreieckförmiges Steuerstück 59 gegen die Achse 2 hin ab. Der Spitzenwinkel, der Steuerstücke 59 nimmt mit zunehmendem Abstand vom vordem Schuh 19 ab. An den beiden Schenkeln 60 der Steuerstücke 59 liegt je ein Anschlagstück 61 an, das sich stimseitig an einer zur Achse 2 senkrechten Fläche 62 eines mit dem betreffenden Keil 15 starr verbundenen Anschlags 63 abstützt. Jedes Anschlagstück 61 hat an der den Schenkeln 60 und der Fläche 62 gegenüberliegenden Seite eine geneigt zur Achse 2 verlaufende Keilfläche 64, die mit einer entsprechenden Gegenfläche 65 des betreffenden Schuhs 19 b, 19c, zusammenwirkt. Die Steuerstange 58 ist durch eine nicht dargestellte Feder entgegen der Zugrichtung Z in die in Fig.4 dargestellte Grundstellung vorbelastet, in welcher die Anschlagstücke 61 mit ihren vorderen und hinteren Seiten an den Schenkeln 60, der Fläche 62 und der Gegenfläche 65 anliegen.

Wird nun das Kabel 1 in Richtung Z gezogen, so entfernt sich wegen der Seildehnung der vorderste Schuh, 19 a vom hintersten 19 n und nimmt die Stange 58 mit. Dadurch entfernen sich die Steuerstücke 59 von den Anschlagstücken 61. Weil die nachfolgenden Schuhe 19 b, und 19 c ebenfalls durch den Zug Z belastet werden, schieben sie über die Keilflächen 65 die gegenüberliegenden Anschlagstücke 61 gegeneinander, bis sie wieder am Steuerstück 59 anliegen. Weil der Spitzenwinkel mit zunehmendem Abstand von der vordersten Backe 19 a abnimmt, ist auch die Verschiebung der Anschlagstücke 61 gegeneinander mit zunehmendem Abstand geringer. Die Winkel werden so gewählt, dass der durch die Anschläge 21 begrenzte Verschiebeweg ausgehend vom hintersten Schuhpaar 19 n linear zunimmt

Bei der Entlastung des Kabels 1 vom Zug zieht die Feder die Steuerstange 58 in die Grundstellung zurück und die Steuerstücke 59 treiben entsprechend die gegenüberliegenden Anschlagstücke 61 wieder in die Grundstellung auseinander.

Die beschriebene automatische Anschlag-Einstellung hat vor allem den Vorteil, dass eine gleichmässige Zugkraftaufteilung auf die einzelnen Schuhpaare erreicht wird, ohne dass zuvor der Elastizitätsmodul des Seiles 1 bestimmt werden muss. Dieselbe Vorrichtung kann ohne Änderung für unterschiedliche Seilarten eingesetzt werden.

## Patentansprüche

1. Vorrichtung zum Befestigen, Spannen oder Ziehen eines dehnbaren Zugelementes (1) insbesondere eines Stahlseils, umfassend zwei zur Achse (2) des Zugelementes (1) gegeneinander bewegbare Halter (15, 16), mehrere in Achsrichtung des Zugelementes (1) hintereinander paarweise einander gegenüberliegend auf den Haltern (15, 16) angeordnete Klemmbacken (19, 20) mit Eingriffsflächen für das Zugelement (1), wobei mindestens die Mehrzahl der Klemmbacken (19, 20) auf den Haltern (15, 16) in Achsrichtung aus einer Grundstellung verschiebbar sind.

2. Vorrichtung nach Anspruch 1, wobei die Verschiebebewegung (22) für die Mehrzahl der verschiebbaren Klemmbacken (19, 20) begrenzt ist und mit zunehmendem Abstand von dem in Zugrichtung (Z) des Zugelementes (1) gesehen hintersten Klemmbackenpaar zunimmt, bei konstanter Klemmbackenlänge vorzugsweise linear.

3. Vorrichtung nach Anspruch 1 oder 2 wobei die Klemmbacken (19, 20) auf Gleitflächen (17, 18) aufliegen, die annähernd parallel zur Achse (2) des Zugelementes (1) sind, und wobei die Haftreibung zwischen den Klemmbacken (19, 20) und den Gleitflächen (17, 18) geringer ist als die Haftung zwischen den Klemmbacken (19, 20) und dem Zugelement (1).

4. Vorrichtung nach einem der Ansprüche 1-3, wobei die Klemmbacken (19, 20) an den Kontaktflächen mit dem Zugelement (1) ein Material aufweisen, das weicher ist als die Peripherie des Zugelementes.

5. Vorrichtung nach einem der Ansprüche 1-4, wobei jeder Halter einen Keil (15, 16) umfasst und die beiden gegenüber liegenden Keile (15, 16) an gegeneinander konvergierenden Keilflächen (14) eines Gestells (11) verschiebbar sind.

6. Vorrichtung nach Anspruch 5, wobei das Gestell (11) zwei Teile (12, 13; 52) umfasst, welche gegeneinander derart beweglich sind, dass Durchmesserdifferenzen des Zugelementes (1) über die Klemmlänge ausgeglichen werden.

7. Vorrichtung nach Anspruch von 5 oder 6, wobei das Gestell (11) quer zur Achse (2) des Zugelementes (1) nach der einen Seite offen ist.

8. Vorrichtung nach einem der Ansprüche 1-7, wobei der Verschiebeweg (22) der Klembacken (19, 20) aus ihrer Grundstellung gegen ihren jeweiligen Anschlag (21) einstellbar ist.

9. Vorrichtung nach einem der Ansprüche 1 - 7 , wobei sie eine Einrichtung (58-65) zur automatischen Einstellung der Wegbegrenzung für die verschiebbaren Klemmbackenpaare (19,20) enthält.

10. Vorrichtung nach Anspruch 9, wobei die Einstellung der Wegbegrenzung von der Verschiebebewegung des in Zugrichtung (Z) vordersten Klemmbackenpaares gesteuert ist.

## Claims

1. Device for fixing, tensioning or pulling an extensible traction element (1), in particular a steel cable, comprising two supports (15, 16) movable towards each other transverse to the axis (2) of the traction element (1), a plurality pairs of clamping jaws (19, 20) arranged mutually opposite on the supports (15, 16) one behind the other in the direction of the axis of the traction element (1), the said clamping jaws (19, 20) having engagement surfaces for the traction element (1), wherein at least the majority of the clamping jaws (19, 20) are displaceable in the axial direction from a basic position on the supports (15, 16).

2. Device according to claim 1, in which the displacement stroke (22) for the majority of the displaceable claming jaws (19, 20) is limited and increases with increasing distance from the rearmost clamping jaw pair as viewed in the direction of traction (Z) of the traction element (1), preferably linearly at constant clamping jaw length.

3. Device according to claim 1 or 2, in which the clamping jaws (19, 20) lie on slide surfaces (17, 18), which are approximately parallel to the axis (2) of the traction element (1), and wherein the frictional adhesion between the clamping jaws (19, 20) and the slide surfaces (17, 18) is less than the adhesion between the clamping jaws (19, 20) and the traction element (1).

4. Device according to one of claims 1 - 3, in which the clamping jaws (19, 20) at the surfaces of contact with the traction element (1) are provided with a material which is softer than the periphery of the traction element.

5. Device according to one of claims 1 - 4, in which each support comprises a wedge (15, 16) and the two opposite lying wedges (15, 16) are displaceable on opposing, converging wedge surfaces (14) of a frame (11).

6. Device according to claim 5, in which the frame (11) comprises two components (12, 13; 52) which are movable relative to each other in such fashion that differences in the diameter of the traction element (1) over the clamped length are compensated for.

7. Device according to claim 5 or 6, in which the frame (11) is open to one side at right angles to the axis (2) of the traction element (1).

8. Device according to any of the claims 1- 7, in which the displacement stroke (22) of the clamping jaws (19, 20) from their basic position to their relevant stop (21) is adjustable.

9. Device according to any of the claims 1 - 7, in which it includes means (58 - 65) for automatically adjusting the stroke limits for the displaceable clamping jaw pairs (19, 20).

10. Device according to claim 9, in which the adjustment of the stroke limit is controlled by the displacement motion of the foremost clamping jaw pair in the direction of traction (Z).

## Revendications

1. Dispositif pour la fixation, le serrage ou l'étirage d'un élément de traction extensible (1), en particulier d'un câble en acier, comprenant deux supports (15, 16) mobiles l'un par rapport à l'autre par rapport à l'axe (2) de l'élément de traction (1), plusieurs mâchoires de serrage (19, 20) disposées en vis-à-vis par paires les unes derrière les autres sur les supports (15, 16) dans la direction axiale de l'élément de traction (1), avec des surfaces de prise pour l'élément de traction (1), au moins la majorité des mâchoires de serrage (19, 20) pouvant se déplacer sur les supports (15, 16) dans la direction axiale à partir d'une position de base.

2. Dispositif suivant la revendication 1, dans lequel le déplacement (22) pour la majorité des mâchoires de serrage mobiles (19, 20) est limité et augmente avec une distance croissante par rapport à la paire de mâchoires arrière vue dans la direction de traction (Z) de l'élément de traction (1), de préférence linéairement pour une longueur constante des mâchoires de serrage.

3. Dispositif suivant l'une des revendications 1 et 2, dans lequel les mâchoires de serrage (19, 20) s'appliquent sur des surfaces de glissement (17, 18) à peu près parallèles à l'axe (2) de l'élément de traction (1), et le frottement statique entre les mâchoires de serrage (19, 20) et les surfaces de glissement (17, 18) est inférieur à l'adhérence entre les mâchoires (19, 20) et l'élément de traction (1).

4. Dispositif suivant l'une des revendications 1 - 3, dans lequel les mâchoires de serrage (19, 20) présentent sur les surfaces de contact avec l'élément de traction (1) un matériau plus souple que la périphérie de l'élément de traction.

5. Dispositif suivant l'une des revendications 1 - 4, dans lequel chaque support comprend une clavette (15, 16) et les deux clavettes (15, 16) en vis-à-vis peuvent se déplacer sur des surfaces cunéiformes (14) convergentes entre elles d'un bâti (11).

6. Dispositif suivant la revendication 5, dans lequel le bâti (11) comprend deux parties (12, 13 ; 52) mobiles l'une par rapport à l'autre, de sorte que des différences en diamètre de l'élément de traction (1) sur la longueur de serrage sont compensées.

7. Dispositif suivant l'une des revendications 5 et 6, dans lequel le bâti (11) est ouvert en direction de l'un des côtés transversalement à l'axe (2) de l'élément de traction (1).

8. Dispositif suivant l'une des revendications 1 - 7, dans lequel la course de déplacement (22) des mâchoires de serrage (19, 20) à partir de leur position de base contre leur butée respective (21) est réglable.

9. Dispositif suivant l'une des revendications 1 - 7, comportant un dispositif (58 - 65) pour le réglage automatique de la limitation de course pour les paires de mâchoires de serrage (19, 20) mobiles.

10. Dispositif suivant la revendication 9, dans lequel le réglage de la limitation de course est commandé par le déplacement de la paire de mâchoires de serrage avant dans la direction de traction (Z).
